## Europäisches Patentamt

## European Patent Office

## Office européen des brevets

(11) Veröffentlichungsnummer: **0 291 008 B1**

# EUROPÄISCHE PATENTSCHRIFT

(45) Veröffentlichungstag der Patentschrift: **02.12.92**

(21) Anmeldenummer: **88107480.1**

(22) Anmeldetag: **10.05.88**

(51) Int. Cl.⁵: **B29C 45/17**

(54) **Kunststoff-Spritzgiessmaschine mit einer in unterschiedliche Arbeitsstellungen überführbaren Spritzgiesseinheit.**

(30) Priorität: **11.05.87 DE 3715628**
**04.07.87 DE 3722228**

(43) Veröffentlichungstag der Anmeldung:
**17.11.88 Patentblatt 88/46**

(45) Bekanntmachung des Hinweises auf die
Patenterteilung:
**02.12.92 Patentblatt 92/49**

(84) Benannte Vertragsstaaten:
**AT CH DE ES FR GB IT LI NL**

(56) Entgegenhaltungen:
**EP-A- 0 205 710**
**EP-A- 0 255 569**
**DE-A- 3 630 416**
**FR-A- 1 310 924**
**FR-A- 1 525 249**

(73) Patentinhaber: **Hehl, Karl**
**Arthur-Hehl-Strasse 32**
**W-7298 Lossburg 1(DE)**

(72) Erfinder: **Hehl, Karl**
**Arthur-Hehl-Strasse 32**
**W-7298 Lossburg 1(DE)**

(74) Vertreter: **Mayer, Friedrich, Dr. et al**
**Patentanwälte Dr. Mayer & Frank Westliche 24**
**W-7530 Pforzheim(DE)**

## Beschreibung

Die Erfindung bezieht sich auf eine Kunststoff-Spritzgießmaschine entsprechend dem Oberbegriff des Patentanspruches 1.

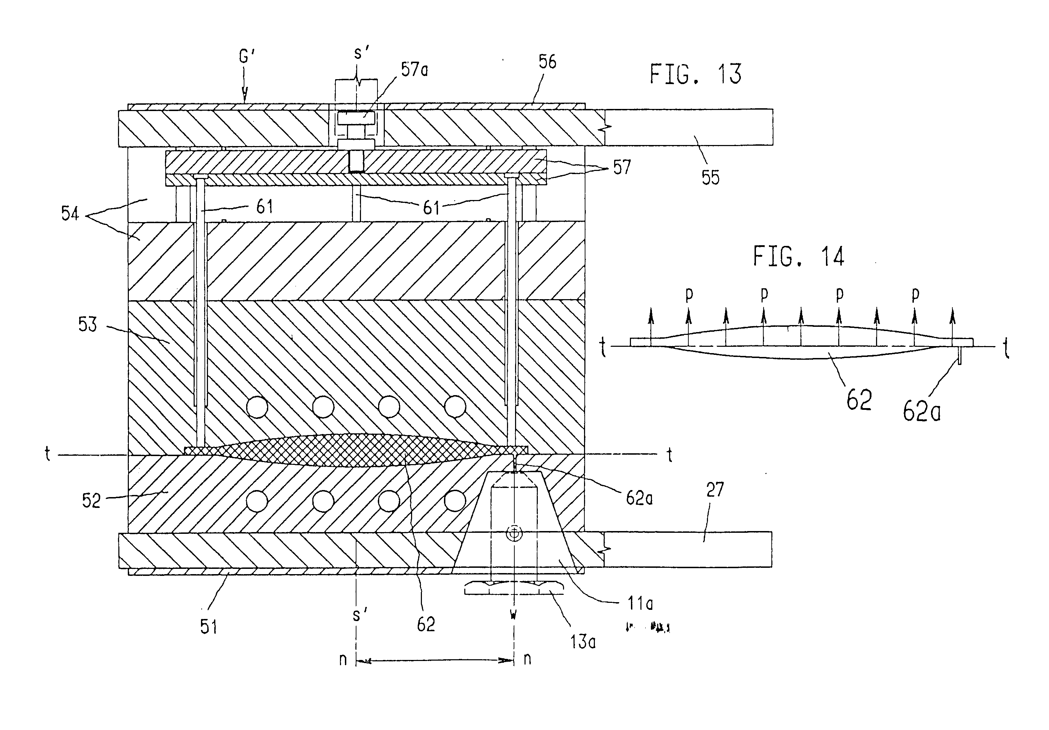

Bei üblichen Kunststoff-Spritzgießmaschinen dieser Art (AT-PS 315 470; DE 36 12 587 A1; DE 36 12 588 A1) sind für eine erste Arbeitseinstellung eine erste Spritzgießform mit in der Mittelachse (s'-s' in Fig. 13) liegender zentraler Angußöffnung und für eine weitere Arbeitseinstellung eine weitere Spritzgießform mit einer in die Trennebene einspritzenden Angußöffnung wahlweise einsetzbar. Die Spritzachse der weiteren Arbeitseinstellung steht senkrecht zur zentralen Spritzachse der ersten Arbeitseinstellung. Die Spritzgießeinheit ist mit Hilfe eines Schwenkmechanismus aus der ersten Arbeitseinstellung in die zweite Arbeitseinstellung verschwenkbar, die üblicherweise als 'Linearanguß' bezeichnet wird. Dieser ermöglicht eine zum Formhohlraum seitliche, also asymmetrische Einspritzung bei gleichzeitiger zur Mittelachse (s'-s' in Fig. 13) der Spritzgießform G' symmetrischer Anordnung dieses Formhohlraumes (Karl Mörwald "Einblick in die Konstruktion von Spritzgußwerkzeugen", Dezember 1965, Bild 19, Ziffer 2,8a und 8b). Ein solches Ergebnis ist zwar auch in der ersten, quer zur Trennfuge der Spritzgießform arbeitenden Arbeitseinstellung möglich, wenn der Formhohlraum mehrere Einzelformhohlräume umfaßt, die um eine zentrale Angußöffnung symmetrisch angeordnet sind (vergl. hierzu die Bilder 16,17 der genannten Broschüre).

Diese Möglichkeit der Anordnung schiedet jedoch aus, wenn der herzustellende Spritzling wegen seiner relativen Größe einen die ganze Breite oder Höhe der Spritzgießform beanspruchenden Formhohlraum erfordert. Unter dieser Voraussetzung können manche Spritzlinge spezifischer Gestaltung nur durch einen 'Linearanguß' in einer befriedigenden Qualität hergestellt werden. Dies gilt z.B für optische Linsen, bei welchen ein zentraler, also symmetrischer Anguß im Gefolge eines Abrisses des Angußteiles eine Verletzung der Linsenoberfläche im kritischen Bereich der Symmetrieachse zur Folge hat. Ein 'Linearanguß' ist ferner zweckmäßig bei extrem langgestreckten, schmalen Spritzlingen aus glasklarem Kunststoff, die z.B. als Sichtfenster an Kunststoff-Vorratsbehältern Verwendung finden. Denn bei ihnen führt der 'Linearanguß' zu optisch günstigeren Ergebnissen. Ein 'Linearanguß' ermöglicht schließlich beim langgestreckten, schmalen, z.B. als Lineal zu verwendenden Spritzling aus faserverstärktem Kunststoff eine über die ganze Länge gleichmäßige Orientierung der Fasern, was bei einem zentralen, symmetrischen Anguß nicht der Fall ist, weil es im Angußbereich zu einer Desorientierung der Fasern und damit zu einer Verminderung der Bruchfestigkeit in diesem Bereich kommt.

Wesentlich ist dabei, daß der Formhohlraum und damit die Formauftriebskräfte (p in Fig. 14) beim Einspritzen etwa symmetrisch zur Mittelachse (s'-s' in Fig. 13) der Spritzgießform liegen können.

Auch ist es seit Jahrzehnten üblich, beim Spritzgießen die Spritzgießeinheit wahlweise für einen zentralen, symmetrischen Anguß quer zur Trennfuge einerseits oder einen 'Linearanguß' in die Trennfuge andererseits anzuordnen (vergl. z.B. US-PS 3,086,244; US-PS 3,836,301, Fig. 2; DE-AS 1 256 364). Insoweit hierbei die wahlweisen Arbeitseinstellungen durch Umsetzung der Spritzgießeinheit mittels eines Hebezeuges verwirklicht werden, ist diese Umsetzung einer Automatisierung nicht zugänglich. Insoweit die Arbeitseinstellungen mit Hilfe eines antreibbaren Schwenkmechanismus erreichbar sind, ist immer noch ein erheblicher Aufwand erforderlich. Zudem erfordert z.B. die vertikale Anordnung der Spritzgießeinheit für den 'Linearanguß' in die Trennfuge der Spritzgießform bei größeren Kunststoff-Spritzgießmaschineneine extreme Raumhöhe, die vielfach nicht vorhanden ist. Auch eine horizontale, in die Trennfuge arbeitende Spritzgießeinheit führt zu einem extremen Stellplatzbedarf der Spritzgießmaschine, weil sich dabei die Spritzachse quer zur Längsrichtung der Spritzgießmaschine weit über deren Stellfläche hinaus erstreckt.

Unabhängig von der oben geschilderten allgemeinen Entwicklung des 'Linearangusses" ist bereits Anfang der 60er Jahre in einer Druckschrift (DE-GM 1.860.806 darauf hingewiesen worden, daß eine Kombination von Zentralanguß und 'Linear-Formfüllung' erhebliche Vorteile mit sich bringe. Bei dieser Kombination soll dem zentralen Anguß das weniger gebräuchliche Linear-Formfüllverfahren, welches vorzugsweise zur Herstellung von großflächigen Kunststoffteilen über einen abgewinkelten seitlichen Breitschlitz-Anguß Anwendung findet, zugeordnet werden und beide Verfahren je nach den Erfordernissen wahlweise zum Einsatz kommen. Die genannte Druckschrift hatte indessen keinen Einfluß auf die oben erörterte allgemeine Entwicklung des 'Linearangusses' in den nachfolgenden Jahrzehnten, welche durch die Verwirklichung des Linearangusses durch Einspritzung in die Trennfuge bestimmt war. Offensichtlich fehlte es an einer brauchbaren konstruktiven Lösung zur Realisierung dieser 'Linear-Formfüllung' als Voraussetzung für die Einführung in den Markt. Im übrigen erlaubt der bekannte konstruktive Aufbau auch keinen wirklichen Präzisionsspritzguß, der sowohl bei jedem Spritzzyklus als auch bei Änderungen der Spritzbedingungen und der Kunststoffmaterialien eine exakt reproduzierbare Spritzachse voraussetzt.

Hiervon ausgehend liegt der Erfindung die Aufgabe zugrunde, eine Kunststoff-Spritzgießmaschine, die wahlweise einen zentralen Anguß oder eine 'lineare Formfüllung' ermöglicht, derart weiterzubilden, daß einerseits allen in der Praxis vorkommenden spritztechnischen Erfordernissen bei der Herstellung von Kunststoff-Formteilen unterschiedlicher Gestalt und Größe und bei Verwendung von Kunststoffen mit unterschiedlichen physikalischen Eigenschaften Rechnung getragen werden kann und andererseits die prinzipiellen Voraussetzungen für eine Automatisierung der Umstellung der Spritzgießeinheit in die für einen Präzisionsspritzguß notwendigen Arbeitsstellungen bei geringem technischen Aufwand vorliegen.

Diese Aufgabe wird erfindungsgemäß durch die im Kennzeichen des Patentanspruches 1 genannten Merkmale gelöst.

Bei einer solchen Ausbildung liegen bei sehr geringem Aufwand für die erforderliche Parallelverschiebung die Voraussetzungen für die Reproduktion einer zur Symmetrieachse der Formschließeinheit konzentrischen oder parallelen Spritzachse in allen Arbeitseinstellungen vor.

Bei einer Ausbildung nach Anspruch 2 oder 3 ist nach Programm eine 'Abnahmestellung' realisierbar, in welcher der Plastifizierzylinder bei maximaler Verschwenkung der Spritzeinheit aus seinem Tragkörper axial herausnehmbar ist. Ferner eine 'Leerspritzstellung', in welcher die Spritzgießeinheit zwecks Wechsel des Kunststoffes leergespritzt werden kann, wobei das ausgespritzte Kunststoffmaterial bei Auftreffen auf die gekühlte rückwärtige Oberfläche des Formträgers erstarrt und von dieser Oberfläche zur Entsorgung abfällt.

Eine Abstützung des Antriebes für die Plattform der Verschiebeeinrichtung gemäß Anspruch 5 ermöglicht eine leichte Nachrästung einer Kunststoff-Spritzießmaschine mit der als bauliche Einheit ausgebildeten Verschiebevorrichtung. Denn diese Einheit ist dank einer Lagerung ihrer Führungsstangen entsprechend Anspruch 6 mit wenigen Handgriffen vom Maschinenfuß abnehmbar.

Zum Begriff der 'weiteren Arbeitseinstellungen' bei 'nicht-zentraler Spritzachse' ist abschließend zu bemerken: Im Streben nach dem strömungstechnischen Optimum für einen Spritzling kann es sich beispielsweise herausstellen, daß dieses vorliegt, wenn der Anguß nur geringfügig neben der zentralen Spritzachse liegt. In diesem Falle ist der Kunststoff nicht, wie für eine lineare 'Formfüllung' typisch am Rande des Formhohlraumes, sondern über eine entsprechend positionierte Angußöffnung der zweiten Spritzgießform in einen mittleren Bereich des Formhohlraumes einzuführen.

Nachstehend wird die Erfindung anhand der Zeichnung erläutert. Es zeigen:

Fig. 1,2 Die Kunststoff-Spritzgießmaschine bei zentraler Spritzachse in Seitenansicht und in Draufsicht (in Fig. 2 ohne Spritzgießform),

Fig. 3 die Kunststoff-Spritzgießmaschine bei nicht-zentraler Spritzachse in Draufsicht mit einer Spritzgießform (G′) mit nicht-zentraler Angußöffnung (11a),

Fig. 4 die Kunststoff-Spritzgießmaschine bei in Leerspritzstellung befindlicher Spritzgießeinheit in Draufsicht,

Fig. 5 die Kunststoff-Spritzgießmaschine bei in Abnahmestellung befindlicher Spritzgießeinheit in Draufsicht,

Fig. 6 die Kunststoff-Spritzgießmaschine im Schnitt nach Linie VI-VI von Fig. 1,

Fig. 7 einen Ausschnitt aus dem Maschinenfluß mit zugehöriger Verschiebevvorrichtung in Draufsicht,

Fig. 8 die Anordnung gemäß Fig. 7 in Seitenansicht,

Fig. 9 die Kunststoff-Spritzgießmaschine im Schnitt nach Linie IX-IX von Fig. 1,

Fig. 10 die Anordnung gemäß Fig. 9 ohne Spritzgießeinheit,

Fig. 11 eine Variante desFormträgers für eine Verschiebung der Spritzgießeinheit in vertikaler Richtung in einer der Fig. 10 entsprechenden Darstellung,

Fig. 12, 13 eine Spritzgießform (G′) mit nicht-zentraler Angußöffnung in perspektivischer Darstellung sowie im horizontalen Schnitt und

Fig. 14 den fertigen Spritzling (optische Linse) zur Demonstration der beim Einspritzen des Kunststoffes im Formhohlraum wirksam werdenden, parallel zur Mittelachse der Spritzgießform verlaufenden Auftriebskräfte.

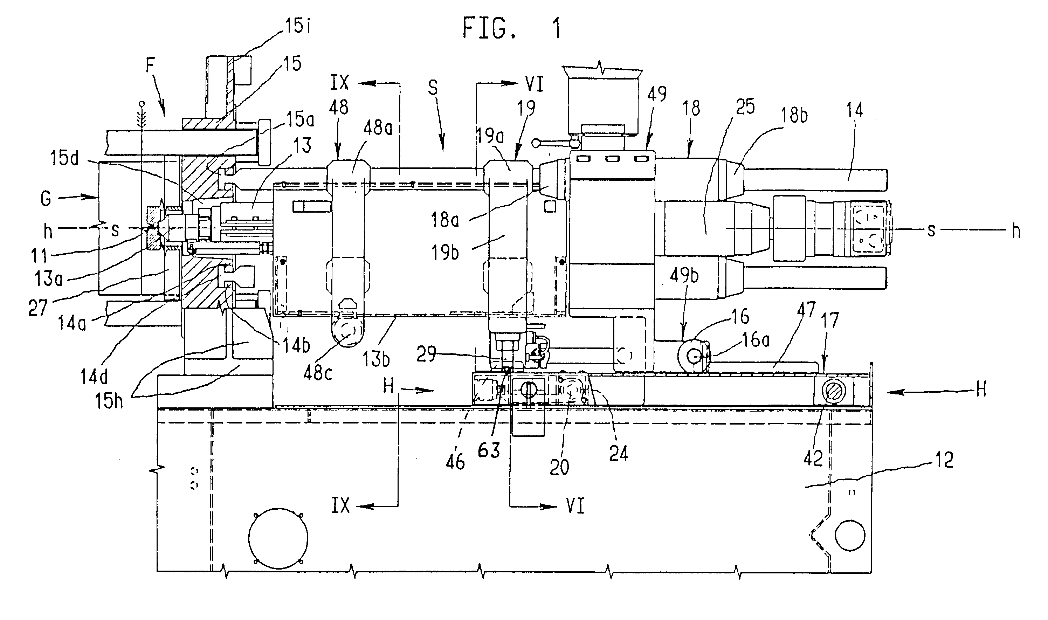

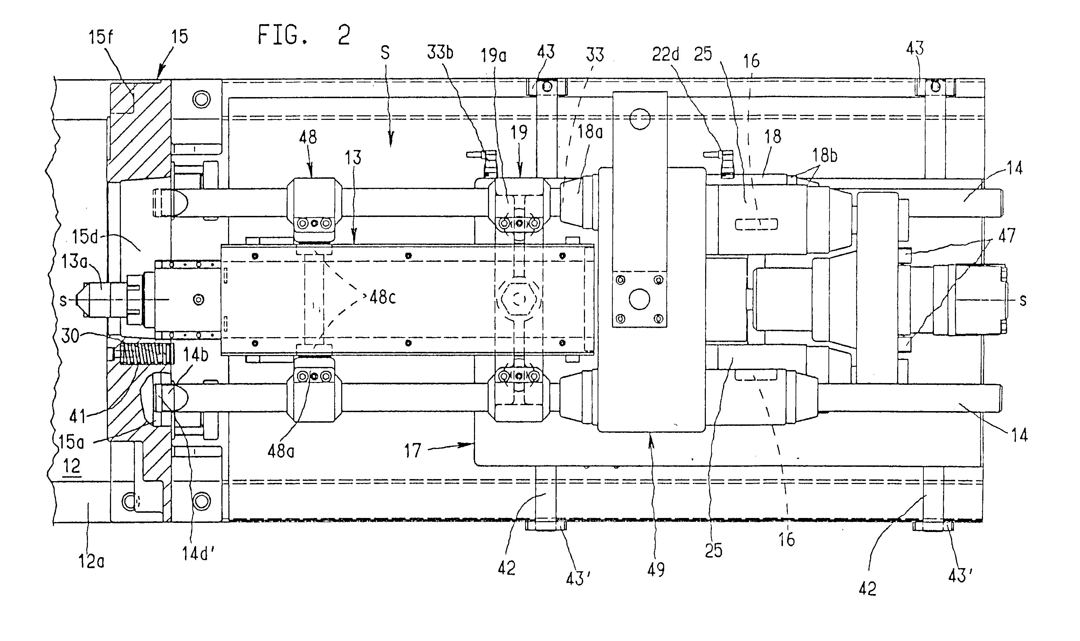

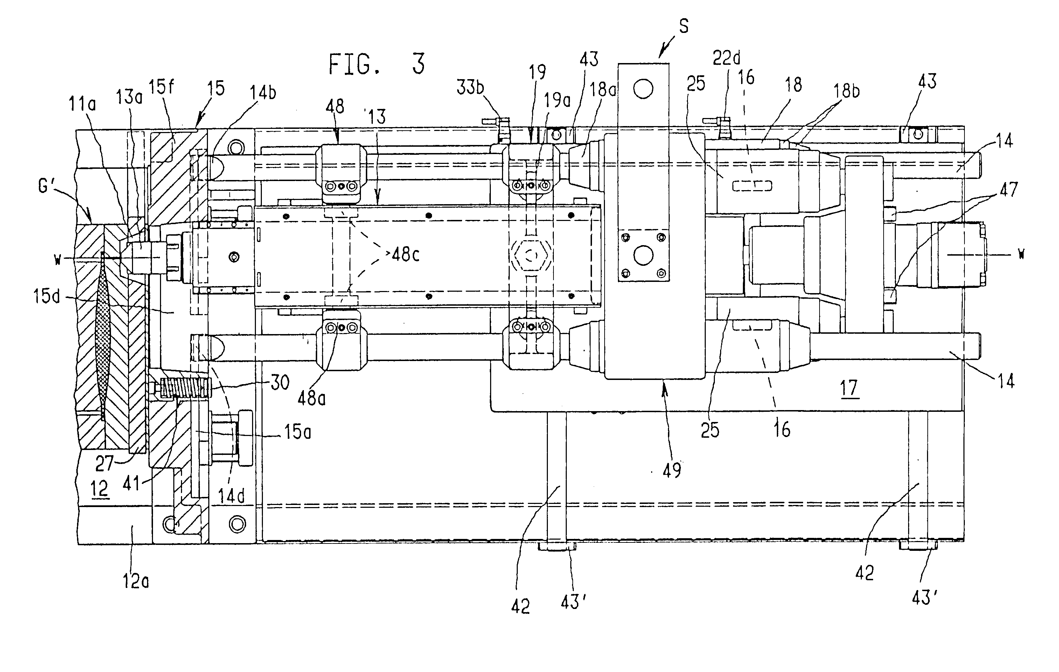

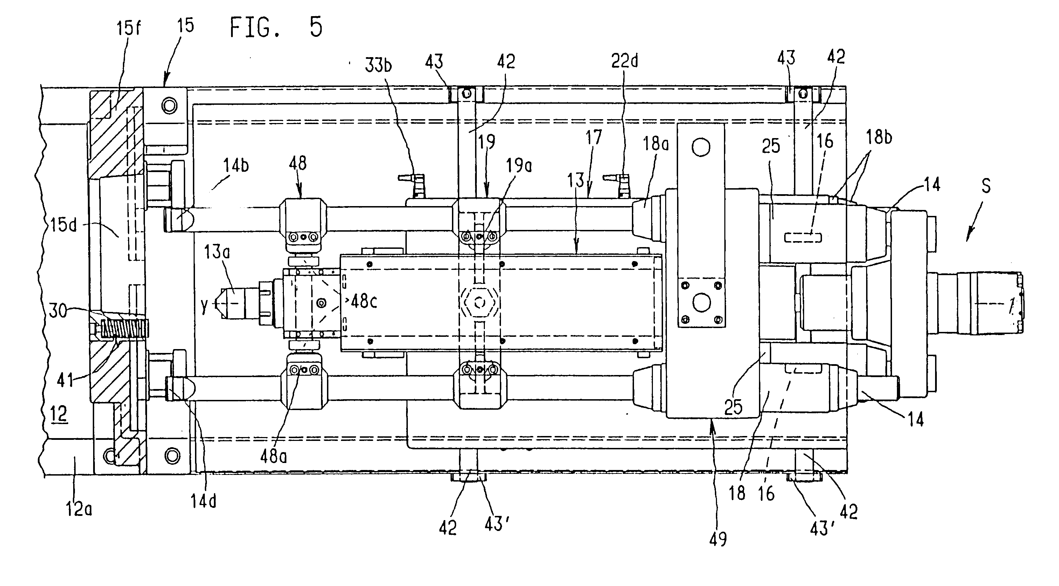

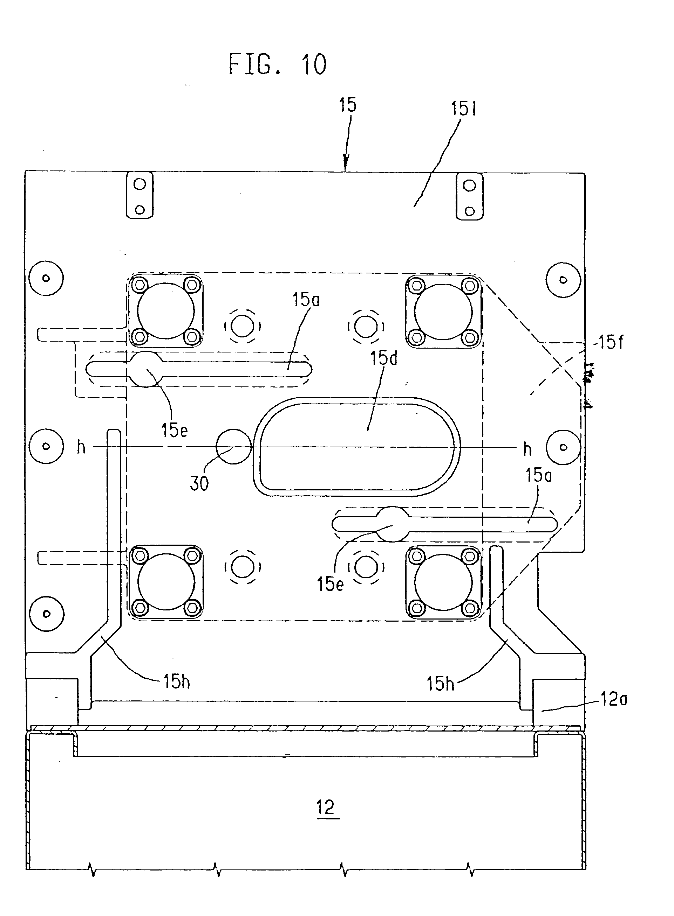

Die Formschließeinheit F ist auf dem Maschinenfuß 12 der Kunststoff-Spritzgießmaschine angeordnet. Der stationäre Formträger 15 der Formschließeinheit F ist an parallelen Führungleisten 12a des Maschinenfußes 12 zentriert. Die stationäre Hälfte der Spritzgießform G (Fig. 1) bzw. G′ (Fig. 3) ist mittels einer Anlageplatte 27 auf den stationären Formträger 15 aufspannbar, der eine Durchtrittsöffnung 15d für die Düse 13a der Plastifizierreinheit 13 der Spritzgießeinheit S aufweist. Bei den Spritzzyklen des Spritzbetriebes wird die Spritzgießeinheit in der Regel je einmal auf die jeweilige Spritzgießform G oder G′ aufgesetzt und nach der Einspritzung des Kunststoffes wieder abgesetzt. Dies geschieht mit Hilfe der hydraulischen Antriebszylinder 18, deren Kolben fest auf den axial abgestützten Kolbenstangen 14 sitzen. Die Spritzgießeinheit S ist auf den Kolbenstangen 14 verschiebbar gelagert, die mit vorderen Anschlußenden 14d (Fig. 5) am stationären Formträger 15 axial festgelegt sind. Im Bereich rückseitiger hydraulischer Einspritzzylinder 25 ist die Spritzgießeinheit S über Laufrollen 16 auf der Plattform 17 einer Verschiebeeinrichtung H abgestützt, mit deren Hilfe die Spritzgießeinheit S horizontal verschiebbar ist. Bei den Spritzzyklen wird die Last der axial hin- und herbewegten Spritzgießeinheit S im rückwärtigen Bereich auf der Plattform 17 der Verschiebeeinrichtung H abgestützt. Die Rollen 16 sitzen auf einer Achse 16a des Lagerstückes 49b des Tragkörpers 49. Die Spritzgießeinheit S ist über Zylinderdeckel 18a und 18b der hydraulischen Antriebszylinder 18 auf den Kolbenstangen 14 geführt, die mittels eines U-förmigen Stützteiles 19 auf der Plattform 17 der Verschiebeeinrichtung H abstützbar sind. Die freien Enden der vertikalen U-Schenkel 19b des Stützteiles 19 sind als Muffen 19a ausgebildet, die als Klemmlager die Kolbenstangen 14 umgreifen. Das Stützteil 19 ist über Mittel 29 zur Justierung der Spritzachsen auf der Plattform 17 abgestützt. In Fig. 1 befindet sich die Spritzgießeinheit S in einer ersten Arbeitsstellung, bei welcher die zugehörige Spritzachse s-s zentral in der Symmetrieachse der Form-schließeinheit F koaxial zu einem zentralen Angußkanal 11 der Spritzgießform G liegt. Die Spritzgießeinheit S ist somit über die Durchtrittsöffnung 15d des stationären Formträgers 15 auf die für einen zentralen Anguß eingerichtete Spritzgießform G aufsetzbar. Die Spritzgießeinheit ist in wenigstens eine weitere Arbeitseinstellung überführbar, in welcher sie bei nicht-zentraler Spritzachse w-w auf eine andere, für einen seitlichen, asymmetrischen Anguß eingerichtete Spritzgießform G′ mit Angußkanal 11a* aufsetzbar ist. Die Überführung der Spritzgießeinheit erfolgt in einer zur zentralen Spritzachse s-s achsparallelen Lage, also durch eine einfache Parallelverschiebung. Eine oder mehrere wahlweise einstellbare Spritzachsen w-w liegen demzufolge parallel zur zentralen Spritzachse s-s. Die Kolbenstangen 14 sind in horizontalen Führungen 15a des Formträgers 15 verschiebbar gelagert. Bei Verschiebung der Spritzgießeinheit S wandern die Kolbenstangen 14 in den nutenartigen Führungen 15a, die beidseits einer in Verschieberichtung verlängerten Durchtrittsöffnung 15d des Formträgers 15 angeordnet sind. Zur axialen Festlegung der Kolbenstangen 14 sind diese an ihren Anschlußenden 14d in den Führungen 15a im Bereich diametraler Einschnürungen 14b hintergriffen. Dabei sind Schultern 14a der Trägersäulen 14 zur Aufnahme des Düsenanlage-Gegendruckes an entsprechenden Schultern der Führungen 15a anpreßbar. Die Führungen 15a sind abgewinkelte Ausformungen des als Formträger 15 dienenden Gußstückes. Die wahlweisen weiteren Arbeitseinstellungen der Spritzgießeinheit S mit nicht-zentralen Spritzachsen w-w liegen neben der zentralen Spritzachse s-s, also auf der einen Seite dieser Spritzachse s-s in einer horizontalen Überführungsebene h-h. Die wahlweise einstellbaren Spritzachsen w-w durchsetzen den Formträger 15 innerhalb der lichten Weite seiner in Überführungsrichtung erweiterten Durchtrittsöffnung 15d. wie aus Fig. 2 ersichtlich, befindet sich die Spritzachse w-w für eine nicht-zentrale Angußöffnung in einem etwa durch die Breite der Durchtrittsöffnung 15d bestimmten maximalen Abstand von einer zentralen Spritzachse s-s. Aus der ersten Arbeitseinstellung mit zentraler Spritzachse s-s ist die Spritzgießeinheit auch in weitere Stellungen (andersseitige Stellungen) bewegbar, die auf der anderen Seite der Spritzachse s-s liegen. Dabei befindet sich die Spritzachse y-y (Fig. 5) bei einer ersten, andersseitigen Stellung in einem Abstand von der zentralen Spritzachse s-s, der etwa dem Durchmesser einer Kolbenstange 14 entspricht. In dieser Stellung ist die Spritzgießeinheit S axial vom Formträger 15 abziehbar. Die Führungen 15a sind nämlich in einem mit dieser Stellung (Abnahmestellung) korrespondierenden Abschnitt zur axialen Freisetzung der Anschlußenden 14d der Trägersäulen mit Ausnehmungen 15e (Fig. 10) versehen. Eine Abnahme der Spritzgießeinheit S aus den Führungen 15a des Formträgers 15 ist demzufolge durch folgende Schritte zu bewirken:

Die Spritzgießeinheit S wird auf die Spritzachse y-y (Fig. 5) also in ihre Abnahmestellung überführt. Sodann wird sie mit Hilfe der Antriebszylinder 18 auf die Spritzgießform G bzw. G′ aufgesetzt. Danach werden die Antriebszylinder so betätigt, wie es beim normalen Spritzbetrieb in jedem Spritzzyklus für ein Aufsetzen der von der Spritzgießform G bzw. G′ abgesetzten Spritzgießeinheit S erforderlich wäre. Durch die axiale Anlage der Düse 13a der Plastifiziereinheit 13 an der Spritzgießform G bzw. G′ ergibt die vorgenannte Betätigung der Antriebszylinder 18 einen Rückwärtshub der Trägersäulen 14, in dessen Verlauf diese aus den Führungen 15a axial ausgezogen werden. Dabei gleiten die der Justierung dienenden Mittel 29 des Stützteiles 19, über welche dieaus den Führungen 15a abgenommene Spritzgießeinheit S auf der Plattform 17 ruht, auf der Oberfläche dieser Plattform 17. In der bei einer weiteren Bewegung der Verschiebeeinrichtung H erreichbaren andersseitigen

* im Abstand   n-n (Fig. 13) von der Mittelachse   s′-s′

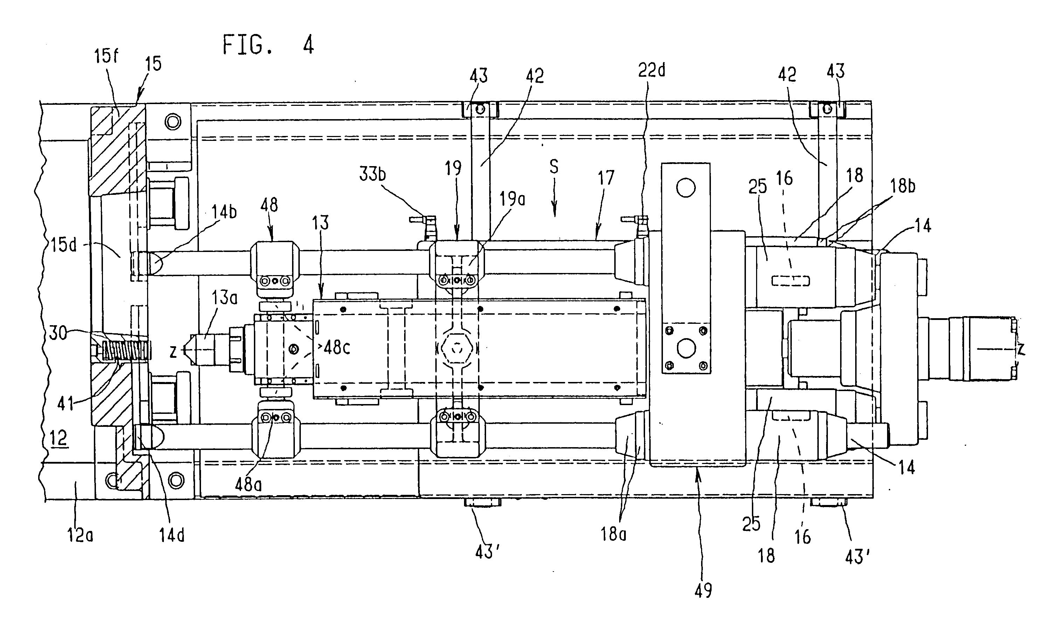

Stellung (Leerspritzstellung) der Spritzgießeinheit S liegt die Spritzachse z-z außerhalb des Querschnittbereiches der Durchtrittsöffnung 15d des Formträgers 15 (Fig. 4). Dies Leerspritzstellung wird herbeigeführt, wenn der Spritzbetrieb mit einem anderen Kunststoff fortgesetzt werden soll. Beim Leerspritzen des Plastifizierzylinders befindet sich die Düse 13a im axialen Abstand von der rückseitigen Oberfläche des Formträgers 15 (Fig. 4). Wird in Leerspritzstellung durch einen axialen Einspritzhub der Förderschnecke plastifizierter Kunststoff aus der Düse 13a ausgespritzt, trifft dieser in der Spritzachse z-z in einem Bereich auf die Rückseite des Formträgers 15, der mit Hilfe eines Kühlkanals 41 kühlbar ist. Der Kühlkanal ist am Umfang eines Schraubenbolzens 30 gebildet. Er ist von der mit Schraubenwindungen besetzten Oberfläche dieses Schraubenbolzens 30 und der Innenwand einer den Schraubenbolzen 30 umschließenden Bohrung im Formträger 15 begrenzt. Der Schraubenbolzen 30 ragt mit einer durch seine Stirnseite gebildeten Prallfläche aus der rückseitigen Oberfläche des Formträgers 15 hervor. Beim Auftreffen des heißen Kunststoffmaterials auf die Prallfläche erstarrt dieses und fällt zur Entsorgung nach unten ab.

In allen wahlweise zu verwirklichenden Arbeitseinstellungen bzw. Stellungen der Spritzgießeinheit S verlaufen die Kolbenstangen 14 symmetrisch zur jeweiligen Spritzachse s-s; w-w bzw. y-y; z-z, so daß Verkantungstendenzen an der Spritzgießeinheit vermieden sind.

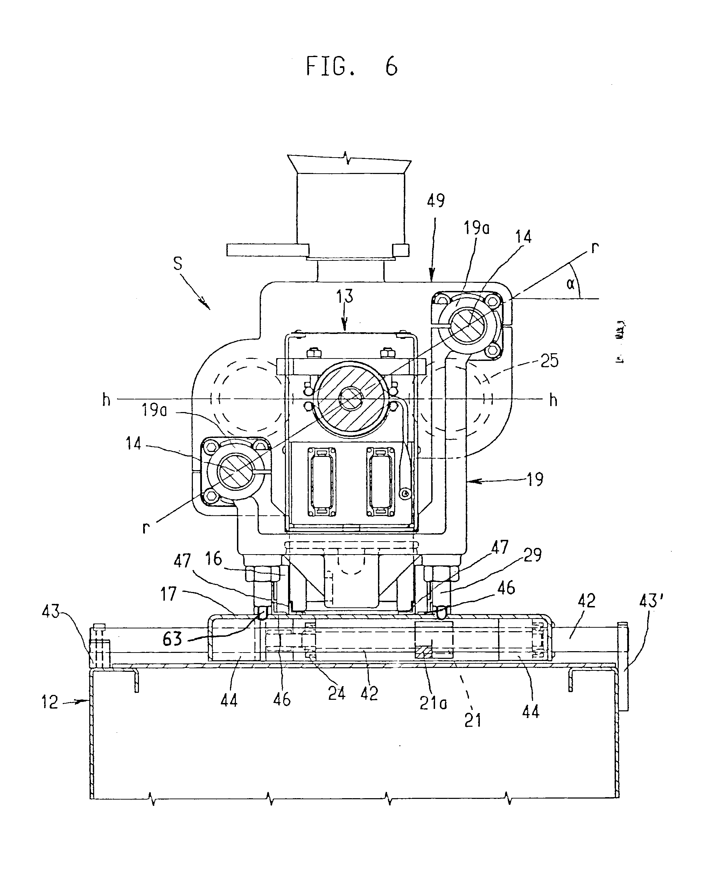

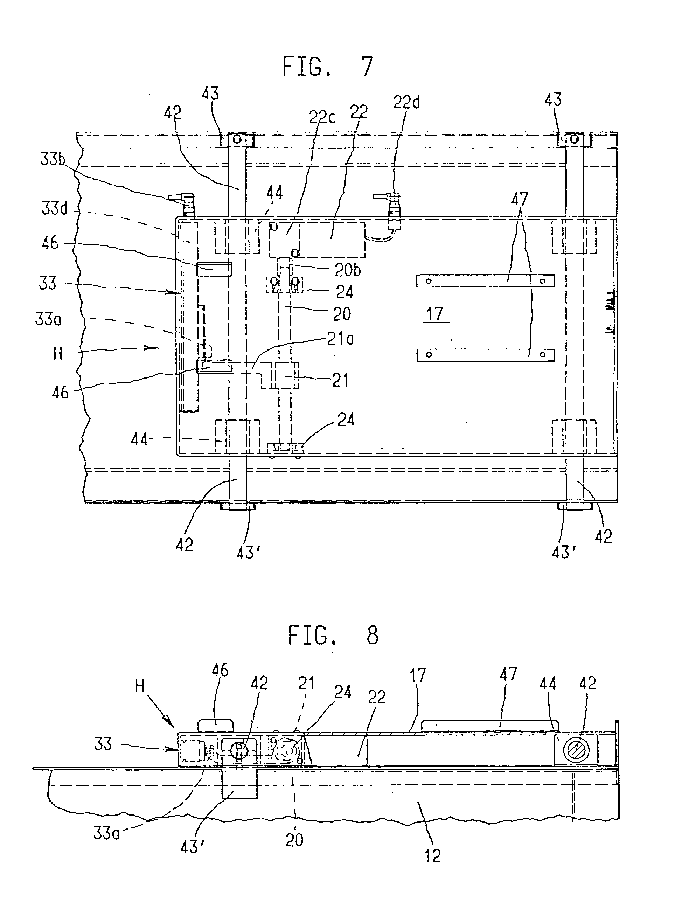

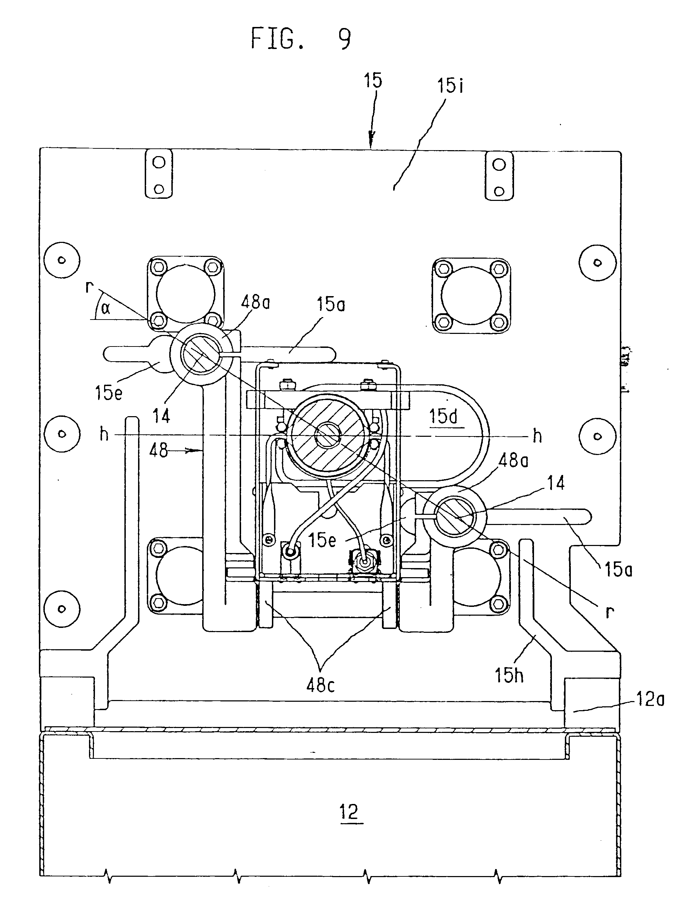

Wie insbesondere aus Fig. 7, 8 ersichtlich ist in der Verschiebeeinrichtung H ein als Wegmeßeinrichtung arbeitendes Linearpotentiometer 33 angeordnet, das an der Plattform 17 befestigt ist. Der Schlitten 33a des Linearpotentiometers 33 ist mit dem Lagerelement 21a verbunden. Das mit Anschluß 33b versehene Linearpotentiometer 33 liefert dem Rechner der Kunststoff-Spritzgießmaschine die Signale, die zur Realisierung der jeweils gewünschten Arbeitseinstellung der Spritzgießeinheit S erforderlich sind. Für alle Arbeitseinstellungen einschließlich der 'Abnahmestellung' und der 'Leerspritzstellung' genügt die programmierte Horizontalbewegung der Verschiebeeinrichtung H im Zusammenspiel mit der Axialbewegung der Spritzgießeinheit S, welche durch die hydraulischen Antriebszylinder 18 bewirkt wird. Dabei werden die Anschlußenden 14d der Trägersäule 14 für eine Verschiebung in den nutenartigen Führungen 15a jeweils freigegeben, wenn der Düsenanlage-Gegendruck durch das Absetzen der Spritzgießeinheit S von der Spritzgießform G; G' aufgehoben ist. Auch der Durchfluß des Kühlmediums durch den Kühlkanal 41 im Formträger F ist in Abhängigkeit vom Überführen der Spritzgießeinheit S in die 'Leerspritzstellung' nach Program des Rechners steuerbar. Wie insbesondere aus den Fign. 9 und 10 erkennbar, sind die beiden gleich ausgebildeten nutenförmigen Führungen 15a über und unter der verlängerten Durchtrittsöffnung 15d angeordnet. Die eigentlichen Zylinder der hydraulischen Antriebszylinder 18 sind durch Bohrungen im Tragkörper 49 gebildet. Der stationäre Formträger 15 weist zur Versteifung am Umfang einen umlaufenden Schild 15i sowie Rippen 15h auf. Aus Fig. 10 ist erkennbar, daß der Mittelteil des Formträgers 15 auf der rechten Seite durch einen Abschnitt 15f verbreitert ist, um ihm eine ausreichende Stabilität zu verleihen. Die Kolbenstangen 14 der Spritzgießeinheit S liegen in einer durch die zentrale Spritzachse s-s gehenden Ebene r-r (Fig. 6, 9), die einen Winkel α zur Horizontalen einschließt.

Die beiden hydraulischen Einspritzzylinder 25 hingegen liegen in einer durch die zentrale Spritzachse s-s gehenden horizontalen Ebene.

Die Spritzgießeinheit S ist im düsenseitigen Abschnitt ihrer Plastifiziereinheit mittels Laufrollen 48c eines Führungsbügels 48 auf den Trägersäulen 14 abgestützt. Dabei bildet die Unterseite eines den Plastifizierzylinder umschließend Viereckrohres 13b Rollbahnen, auf welchen die Laufrollen 48c aufliegen. Klemmuffen 48a des Führungsbügels umschließen die Kolbenstangen 14. Die aus Blech gefertigte Plattform 17 ist mit Kugelbuchsen 44, die innerhalb der Plattform mit dieser fest verbunden sind, auf Führungssäulen 42 horizontal verschiebbar gelagert. Wie insbesondere aus den Figuren 7, 8 erkennbar, durchgreifen diese Führungssäulen 42 einenends die Lagerbohrungen von Laschen 43', die an die benachbarte Wandung des Maschinenfußes 12 angeschweißt sind. Anderenends liegen die Führungssäulen 42 in nach oben offenen Lagerausnehmungen der ebenfalls mit dem Maschinenfuß 12 verschweißten Lagerstücke 43, wo sie mit Hilfe einer Sicherungsschraube festgelegt sind. Mit der einen Führungssäule ist ein diese Führungssäule 42 umschließendes Lagerelement 21a mittels Klemmschrauben fest verbunden. Durch dieses Lagerelement 21a ist die Kugelrollmutter 21 axial festgelegt. Die mit der Kugelrollmutter 21 zusammenarbeitende Kugelrollspindel 20 ist in ihren mit der Plattform 17 verbundenen Kugellagern 24 axial festgelegt. Das Getriebe 22c eines Antriebsmotors 22* ist über eine Kupplung 20b mit der Kugelrollspindel 20 verbunden. Wird die Kugelrollspindel 20 zur Rotation angetrieben, so wird sie unter Abstützung an der stationären Kugelrollmutter 21 axial in der einen oder anderen Richtung, je nach Drehrichtung bewegt. Die Axialbewegung der Kugelrollspindel 20 wird auf die horizontal geführte Plattform 17 übertragen. Vom Herstellerbetrieb wird der Maschi-

* mit Anschluß 22d

nenfuß 12 grundsätzlich mit Laschen 43' und Lagerstücken 43 gefertigt und ausgeliefert, und zwar unabhängig davon, ob der Kunde eine Auslieferung mit oder ohne Verschiebeeinrichtung wünscht. Die als bauliche Einheit ausgebildete Verschiebeeinrichtung H kann im Falle einer Nachrüstung mit wenigen Handgriffen auf den Maschinenfuß 12 aufgesetzt werden. Dabei werden die Führungsstangen 42 in die Lagerbohrungen der Laschen 43' eingesteckt und anderenends die offenen Lagerausnehmungen der Lagerstücke 43 eingelegt und durch eine Schraube gesichert.

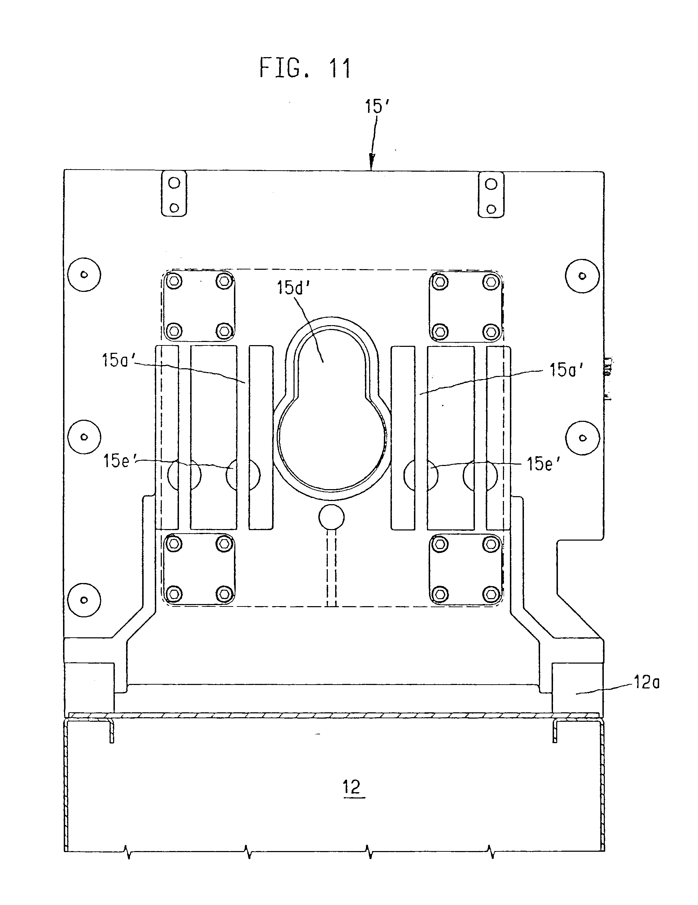

Um die Spritzgießeinheit beim normalen Spritzbetrieb, bei ihrer Horizontalverschiebung zwecks Einstellung auf andere Angußöffnungen oder bei ihrer Abnahme gegen Verkantungstendenzen bzw. Querverschiebungen zu sichern, sind im Bereich der Mittel 29 zur Justierung Leisten 46 angeordnet. Diese sind, wie insbesondere aus Fig. 6 ersichtlich, je durch einen Blechwinkel gebildet. In gleicher Weise liegen die vertikalen Blechschenkel von Leisten 47 zur Führung an den Flanken der Laufrollen 16 an, die ebenfalls durch Blechwinkel gebildet sind. Bei einer vetikalen Verschieberichtung der Spritzgießeinheit kann der Formträger so ausgebildet sein wie aus Fig. 11 ersichtlich. Die Durchtrittsöffnung 15d' ist nach oben erweitert, die Führungen 15a' für die Kolbenstangen 14 verlaufen vertikal und sind in einer horizotnalen Ebene angeordnet. Als Verschiebevorrichtung für die vertikale Verschiebung der Spritzgießeinheit kann eine bekannte Hebebühne (vergleiche z.B. DE-OS 2 156 843) treten.

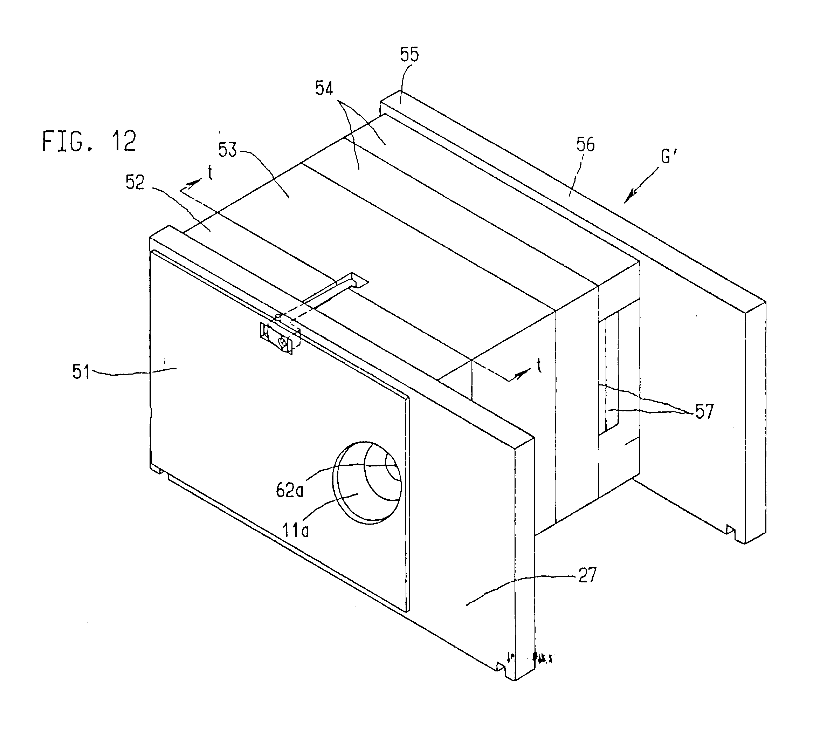

Die in den Figuren 12,13 dargestellte Spritzgießform, G' mit nicht zentraler Angußöffnung dient zur Herstellung einer optischen Linse 62. Die am stationären Formträger 15 befestigbare Hälfte der Spritzgießform umfaßt eine mit Isolierplatte 51 versehene Anlageplatte 27 sowie eine Fassonplatte 52, welche an die Trennfuge t-t der Spritzgießform G' angrenzt und den Formhohlraum für die optische Linse 62 begrenzt. Die am bewegbaren Formträger befestigbare andere Gießformhälte umfaßt eine mit Isolierplatte 56 versehene Anlageplatte 55, eine Konturenplatte 53 sowie weitere Platten 54 und eine Auswerfereinrichtung 57 mit Ausstoßerstiften 61. Letztere sind in Halteplatten 57a befestigt. Der Formhohlraum für die optische Linse 62 liegt symmetrisch zur Mittelachse s'-s' im Bereich der Trennfuge t-t. Dementsprechend werden beim Einspritzen des Kunststoffmaterial in den Formhohlraum die Formauftriebskräfte p (Fig. 14) in symmetrischer Verteilung um die Mittelachse s'-s' (Fig. 13) wirksam. Dadurch unterbleiben schädliche asymmetrische Biegebeanspruchungen in der Spritzgießform weitgehend. Die nicht zentrale kegelstumpfförmige Angußöffnung11a erstreckt sich fast bis zur Trennebene t-t. Wie insbesondere aus Fig. 12 erkennbar, gelangt das plastische Kunststoffmaterial über einen kurzen Angußkanal 62a in den seitlichen Rand des Formhohlraumes und wird dort unter Verwirbelung in Richtung der Mittelachse s'-s' umgelenkt.

Für spezifische spritztechnische Erfordernisse kann es zweckmäßig sein, zwei senkrecht zueinander stehende Verschiebeeinrichtungen für die Spritzgießeinheit S vorzusehen. In diesem Fall kann durch die Kombination der horizontalen Verschiebeeinrichtung mit einer vertikalen Verschiebe- oder Verschwenkeinrichtung jeder beliebige Punkt der Spritzgießform im Bereich der allseitig erweiterten Durchtrittsöffnung 15d angesteuert werden, wie insbesondere aus den Figuren 1,6 ersichtlich umfassen die (in Zeile 8 der Seite 7 erwähnten) Mittel 29 zur Justierung der Spritzachsen s-s; w-w im Stützteil 19 zwei vertikale Zapfen, die symmetrisch zur vertikalen Symmetrieebene der Spritzgießeinheit S angeordnet sind und unten aus dem Stützteil herausragen. Diese Zapfen greifen zentrierend und fixierend in Bohrungen der Plattform 17 ein, wie aus Figur 6 erkennbar. Für das axiale Abnehmen oder Spritzgießeinheit bei einer Spritzachse y-y in Abnahmestellung sind die axial verschieblich gelagerten Bolzen 63 aus den Bohrungen der Plattform manuell herausziehbar. Sie können in herausgezogener Stellung durch einfaches Verriegeln im Gefolge einer Drehbewegung gesichert werden.

**Patentansprüche**

1.  Kunststoff-Spritzgießmaschine, in welcher wahlweise eine Spritzgießform (erste Spritzgießform G) mit zentraler Angußöffnung (11) und zentralem Formhohlraum oder weitere Spritzgießformen (G') mit nicht-zentraler Angußöffnung (11a) für einen asymmetrischen Anguß einsetzbar sind, mit einer horizontalen, auf dem Maschinenfuß (12) angeordneten Formschließeinheit (F) sowie mit einer Spritzgießeinheit (S), welche aus einer ersten Arbeitsstellung, in der sie bei in der Symmetrieachse der Formscließeinheit (F) liegender, zentraler Spritzachse (s-s) mittels hydraulischer Antriebszylinder (18) dank einer Durchtrittsöffnung (15d) im stationären Formträger (15) der Formschließeinheit (F) auf die erste Spritzgießform (G) auffahrbar ist, mittels einer Verschiebeeinrichtung (H) durch eine Parallelverschiebung wahlweise in einer durch die zentrale Spritzachse (s-s) gehenden Überführungsebene (h-h in Fig. 6,9,10) in weitere durch nicht-zentrale Spritzachsen (w-w) bestimmte Arbeitsstellungen überführbar und in diesen weiteren Arbeitsstellungen über eine wenigstens in Richtung der Überführungsebene (h-h) erweiterte Durchtrittsöffnung (15d) auf eine zur Angußöffnung (11) der ersten Spritzgießform (G) achsparallele Angußöffnung (11a) der weiteren Spritzgießform (G′) aufsetzbar ist, deren formhohlraum so angeordnet ist, daß das Zentrum der Auftriebskräfte (p in Fig. 14) des eingespritzten Kunststoffes im wesentlichen in der Mittelachse (s′-s′) der Spritzgießform (G′) liegt, dadurch gekennzeichnet, daß die Kolbenstangen (14) der symmetrisch zur Spritzachse (s-s;w-w;y-y;z-z) angeordneten hydraulischen Antriebszylinder (18) mit ihren Anschlußenden (14d) in nutenartigen Führungen (15a;15a′) des Formträgers (15) verschiebbar, zur axialen Festlegung hintergriffen und auf einer Plattform (17) der Verschiebeeinrichtung (H) mittels eines Stützteils (19) zentrierend abgestützt sind und daß die Antriebszylinder (18) im Falle einer horizontalen Überfuhrungsebene (h-h) in einer Ebene (r-r in Fig. 6,9) liegen, welche zur Horizontalen einen Winkel ( α in Fig.9) einschließt.

2. Kunststoff-Spritzgießmaschine nach Patentanspruch 1, dadurch gekennzeichnet, daß alle nicht-zentralen Spritzachsen (w-w) der Spritzgießeinheit in den wahlweisen weiteren Arbeitseinstellungen (Einspritzstellungen) auf der gleichen Seite der zentralen Spritzachse (s-s) in der Überführungsebene (h-h) liegen und die Spritzgießeinheit (S) zusätzlich in weitere Arbeitseinstellungen (anderseitige Arbeitseinstellungen) überführbar ist, die auf derjenigen Seite der zentralen Spritzachse (s-s) liegen, welche der Seite der Einspritzstellungen gegenüberliegt, wobei die Spritzachse (y-y) der ersten anderseitigen Arbeitseinstellung den Formträger (15) innerhalb der lichten Weite seiner Durchtrittsöffnung (15d) durchsetzt und wobei die Spritzachse (z-z) einer zweiten anderseitigen Arbeitseinstellung den Formträger (15) außerhalb seiner Durchtrittsöffnung (15d) schneidet.

3. Kunststoff-Spritzgießmaschine nach Patentanspruch 2, dadurch gekennzeichnet, daß die Spritzgießeinheit (S) in ihrer ersten anderseitigen Arbeitseinstellung (Abnahmestellung) axial vom Formträger (15) abziehbar ist, wobei die Führungen (15a) in einem mit dieser Abnahmestellung korrespondierenden Abschnitt für einen axialen Durchtritt der Anschlußenden (14d) offen sind und daß der stationäre Formträger (15) im Bereich der Spritzachse (z-z) der zweiten anderseitigen Arbeitseinstellung (Leerspritzstellung) mittels eines von einem Kühlmedium durchflossenen Kühlkanals (41) kühlbar ist.

4. Kunststoff-Spritzgießmaschine nach einem der vorhergehenden Patentansprüche, dadurch gekennzeichnet, daß die Verschiebevorrichtung (H) wenigstens eine motorisch angetriebene Kugelrollspindel (20) mit zugehöriger Kugelrollmutter (21) und eine Wegmeßeinrichtung (Linearpotentiometer 33 in Fig. 7) umfaßt.

5. Kunststoff-Spritzgießmaschine nach einem der Patentansprüche 1-4, dadurch gekennzeichnet, daß die Platteform (17) der Verschiebeeinrichtung (H) in stationären, horizonalen Führungssäulen (42) des Maschinenfußes (12) mit Hilfe einer an einer der Führungssäulen (42) abgestützten stationären Kugelrollmutter (21) und einer an der Plattform (17) angreifenden Kugelrollspindel (20) antreibbar ist.

6. Kunststoff-Spritzgießmaschine nach Patentanspruch 5, dadurch gekennzeichnet, daß die Führungssäulen (42) einenends Lagerbohrungen von Laschen (43′) des Maschinenfußes (12) durchgreifen und anderenends auf Lagerstücken (43) aufliegen, wobei die Spritzgießeinheit (S) beim axialen Abnehmen in Abnahmestellung (Spritzachse y-y) auf der Plattform (17) mit Hilfe von Leisten (46;47) gegen Querverschiebung gesichert ist.

## Claims

1. Plastics material injection moulding machine, in which an injection mould assembly (first injection mould assembly G), having a central injection opening (11) and a central mould cavity, or additional injection mould assemblies (G'), having a non-central injection opening (11a), are selectively utilisable for an asymmetrical injection process, including a horizontal mould closing unit (F) disposed on the machine bed (12) and an injection moulding unit (S), which is transposable from a first working position - in which it is drivable onto the first injection mould assembly (G), when the central injection axis (s-s) lies in the axis of symmetry of the mould closing unit (F), by means of hydraulic drive cylinders (18) due to a through-aperture (15d) in the stationary mould carrier (15) of the mould closing unit (F) - by means of a shifting device (H), as a result of a parallel displacement selectively in a transposing plane (h-h in Figs. 6, 9, 10) extending through the central injection axis (s-s), into additional working positions determined by non-central injection axes (w-w), and is mountable in these additional working positions on an injection opening (11a) in the additional injection mould assembly (G'), which opening is axis-parallel to the injection opening (11) of the first injection mould assembly (G), via a through-aperture (15d), which is widened at least in the direction of the transposing plane (h-h), the mould cavity of said additional injection mould assembly being so disposed that the centre of the mould separating forces (p in Fig. 14) of the injected plastics material lies substantially in the central axis (s'-s') of the injection mould assembly (G'), characterised in that the piston rods (14) of the hydraulic drive cylinders (18), which are disposed symmetrically relative to the injection axis (s-s; w-w; y-y; z-z), are displaceable with their terminal ends (14d) in groove-like guides (15a; 15a') of the mould carrier (15), are engaged at the rear for axial securement and are supported in a centering manner on a platform (17) of the shifting device (H) by means of a support component (19), and in that the drive cylinders (18), in the case where a horizontal transposing plane (h-h) is involved, lie in a plane (r-r in Figs. 6, 9), which forms an angle ($\alpha$ in Fig. 9) relative to the horizontal.

2. Plastics material injection moulding machine according to claim 1, characterised in that all of the non-central injection axes (w-w) of the injection moulding unit, in the selective, additional working positions (injection positions), lie on the same side of the central injection axis (s-s) in the transposing plane (h-h), and the injection moulding unit (S) is additionally transposable into additional working positions (working positions on the other side), which lie on that side of the central injection axis (s-s) which lies opposite the side of the injection positions, the injection axis (y-y) of the first working position on the other side traversing the mould carrier (15) internally of the inside width of its through-aperture (15d), and the injection axis (z-z) of a second working position on the other side intersecting the mould carrier (15) externally of its through-aperture (15d).

3. Plastics material injection moulding machine according to claim 2, characterised in that the injection moulding unit (S), in its first working position on the other side (removal position), is transferable axially from the mould carrier (15), the guides (15a) in a portion corresponding to this removal position being open for the terminal ends (14d) to pass axially therethrough, and in that the stationary mould carrier (15) in the region of the injection axis (z-z) of the second working position on the other side (empty injection position) is coolable by means of a coolant channel (41), which has a coolant flowing therethrough.

4. Plastics material injection moulding machine according to one of the preceding claims, characterised in that the shifting device (H) includes at least one motor-driven roller ball spindle (20), having a roller ball nut (21) associated therewith, and a displacement measuring device (linear potentiometer 33 in Fig. 7).

5. Plastics material injection moulding machine according to one of claims 1-4, characterised in that the platform (17) of the shifting device (H) is drivable in stationary, horizontal guide colomns (42) of the machine bed (12) by means of a stationary roller ball nut (21), which is supported on one of the guide columns (42), and by means of a roller ball spindle (20), which engages with the platform (17).

6. Plastics material injection moulding machine according to claim 5, characterised in that the guide columns (42) extend, at one end, through bearing bores in lugs (43') of the machine bed (12) and rest, at the other end, on bearing parts (43), the injection moulding unit (S) being prevented from effecting transverse displacement on the platform (17) by means of bars (46; 47) in the event of axial removal in the removal position (injection axis y-y).

## Revendications

1. Machine de moulage de matière plastique par injection dans laquelle peuvent être mis en place au choix un moule de moulage par injection (premier moule de moulage par injection G) dont l'ouverture d'alimentation (11) est centrale et dont la cavité du moule est centrale, ou d'autres moules de moulage par injection (G') dont l'ouverture d'alimentation (11a) n'est pas centrale, en vue d'une alimentation asymétrique, comprenant une unité de fermeture des moules (F) horizontale disposée sur le socle (12) de la machine, et comprenant aussi une unité de moulage par injection (S) qui peut être transférée au choix, au moyen d'un dispositif de déplacement (H), grâce à un déplacement en translation, et dans un plan de transfert (h-h sur les figures 6, 9 et 10) passant par l'axe d'injection central (s-s), depuis une première position de travail dans laquelle l'axe d'injection central (s-s) est situé selon l'axe de symétrie de l'unité de fermeture des moules (F) et dans laquelle elle peut être amenée sur le premier moule de moulage par injection (G) au moyen de vérins hydrauliques (18) grâce à une ouverture de passage (15d) ménagée dans le porte-moule fixe (15) de l'unité de fermeture des moules (F), jusque dans d'autres positions de travail déterminées par des axes d'injection non centraux (w-w), et qui, dans ces autres positions de travail, peut être posée, par l'intermédiaire d'une ouverture de passage (15d) qui est élargie au moins dans la direction du plan de transfert (h-h), sur une ouverture d'alimentation (11a) de l'autre moule de moulage par injection (G') dont l'axe est parallèle à l'ouverture d'alimentation (11) du premier moule de moulage par injection (G) et dont la cavité de moulage est disposée d'une manière telle que le centre des forces ascensionnelles (p sur la figure 14) de la matière plastique injectée soit situé pour l'essentiel sur l'axe central (s'-s') du moule de moulage par injection (G'), caractérisée par le fait que les tiges de piston (14) des vérins hydrauliques (18) qui sont disposés symétriquement par rapport à l'axe d'injection (s-s ; w-w ; y-y ; z-z) sont saisies par l'arrière par leurs extrémités de raccordement (14d), en vue de leur fixation dans le sens axial, tout en pouvant coulisser dans des guidages (15a ; 15a') analogues à des rainures du porte-moule (15), et qu'elles sont appuyées d'une manière centrée au moyen d'une pièce d'appui (18) sur une plate-forme (17) du dispositif de déplacement (H), et par le fait que, dans le cas d'un plan de transfert (h-h) qui est horizontal, les vérins (18) sont situés dans un plan (r-r sur les figures 6 et 9) qui forme un angle ($\alpha$ sur la figure 9) par rapport à l'horizontale.

2. Machine de moulage de matière plastique par injection selon la revendication 1, caractérisée par le fait que tous les axes d'injection (w-w) de l'unité de moulage par injection qui ne sont pas centraux sont situés du même côté de l'axe d'injection central (s-s) dans le plan de transfert (h-h) dans les autres positions de travail à choisir (positions d'injection), et que l'unité de moulage par injection (S) peut être transférée en supplément dans d'autres positions de travail qui sont situées du côté de l'axe d'injection central (s-s) opposé au côté de la position d'injection (positions de travail situées de l'autre côté), cependant que l'axe d'injection (y-y) de la première position de travail située de l'autre côté traverse le porte-moule (15) à l'intérieur du diamètre intérieur de son ouverture de passage (15d), et que l'axe d'injection (z-z) d'une deuxième position de travail située de l'autre côté recoupe le porte-moule (15) à l'extérieur de son ouverture de passage (15d).

3. Machine de moulage de matière plastique par injection selon la revendication 2, caractérisée par le fait que l'unité de moulage par injection (S), dans sa première position de travail située de l'autre côté (position d'enlèvement), peut être retirée axialement du porte-moule (15), cependant que les guidages (15a) sont ouverts dans une partie qui correspond à cette position d'enlèvement et qui est destinée à laisser passer axialement les extrémités de raccordement (14d), et par le fait que le porte-moule fixe (15) peut être refroidi, au moyen d'un canal de refroidissement (41) parcouru par un fluide de refroidissement, dans la région de l'axe d'injection (z-z) de la deuxième position de travail située de l'autre côté (position de vidange par projection).

4. Machine de moulage de matière plastique par injection selon l'une des revendications précédentes, caractérisée par le fait que le dispositif de déplacement (H) comprend au moins une broche à billes (20) entraînée par un moteur, ainsi que l'écrou à billes associé (21), et un dispositif de mesure des déplacements (potentiomètre linéaire 33 sur la figure 7).

5. Machine de moulage de matière plastique par injection selon l'une des revendications précédentes, caractérisée par le fait que la plate-forme (17) du dispositif de déplacement (H) peut être entraînée, le long de colonnes de guidage fixes et horizontales (42) du socle (12) de la machine, à l'aide d'un écrou à billes fixe (21) qui est appuyé sur l'une des colonnes de guidage (42) et d'une broche à billes (20) qui vient en prise avec la plate-forme (17).

6. Machine de moulage de matière plastique par injection selon la revendication 5, caractérisée par le fait que les colonnes de guidage (42) traversent à une extrémité des perçages formant paliers de pattes (43') du socle (12) de la machine, et qu'à l'autre extrémité, elle portent sur des pièces formant paliers (43), cependant que l'unité de moulage par injection (S), lors de son enlèvement axial dans la position d'enlèvement (axe d'injection y-y), est bloquée sur la plate-forme (17) à l'aide de barres (46 ; 47), à l'encontre des déplacements transversaux.

FIG. 1

EP 0 291 008 B1

FIG. 2

FIG. 3

EP 0 291 008 B1

FIG. 4

EP 0 291 008 B1

FIG. 5

FIG. 6

FIG. 7

FIG. 8

# FIG. 9

## FIG. 10

FIG. 11

FIG. 12

FIG. 13

FIG. 14

EP 0 291 008 B1